# EUROPEAN PATENT APPLICATION

(11) **EP 2 581 336 A1**
(43) Date of publication of application: **17.04.2013**
(21) Application number: 10852668.2
(22) Date of filing: 25.10.2010
(51) Int. Cl.: B66F 11/00, B66F 7/06, F03D 11/04, E02B 17/08

(54) **MULTIFUNCTIONAL PLATFORM OF WIND POWER GENERATING UNIT AND BLADE DISASSEMBLING METHOD**

(30) Priority: 09.06.2010 CN 201010200359
(71) Applicant: Sinovel Wind Group Co., Ltd, Haidian District, Beijing 100872 (CN)
(72) Inventor: TAN, Xianshun, Beijing 100872 (CN); JIN, Baonian, Beijing 100872 (CN); YAO, Libin, Beijing 100872 (CN)
(74) Representative: Michalski Hüttermann & Partner Patentanwälte
(86) International application number: PCT/CN2010/001684
(87) International publication number: WO 2011/153675

(57) **Abstract**

A multifunctional platform of a wind power generating unit and a blade disassembling method are disclosed. The multifunctional platform comprises: a platform frame (1) which includes a base (11) having an annular center hole (10) and two parallel arms (12) extending from one side of the base (11); a hoist mechanism (2) which includes at least three traction devices (21) and moves the platform up and down; a plurality of tower clamping mechanisms (4) which are fixed around the circumference of the annular center hole (10) of the platform frame (1) and prevents the platform frame (1) from rotating; a moving dolly (5) which slides on the two arms (12); two blade adjusting pedestals (6) which are respectively provided on the protruding ends of the two arms (12); two set of blade drawing mechanisms (8), one end of each set of blade drawing mechanism (8) is respectively connected with one blade adjusting pedestal (6). The blade disassembling method comprises: lifting the multifunctional platform to an appropriate height of the tower (9) by the hoist mechanism (2); tying sling ropes at three positions of a blade (91); disassembling the blade (91) and lowering it to a transport ship by a crane ship, a fan maintenance crane (92) and the blade drawing mechanisms (8).

## Description

### TECHNICAL FIELD

This invention relates to a blade maintenance platform of the offshore wind turbine, and to a blade replacing method of the offshore wind turbine.

### BACKGROUND ART

Clean energy becomes an important trend for economic development, in order to achieve sustainable development, environmental protection, low carbon economy, and energy conservation and emission reduction. Wind power generation develops quickly as an important component of clean energy. In recent years, wind farms continuously have been built all over the world; as onshore wind farms have begun to be established, offshore wind farms develop increasingly. At the same time, the wind turbine is more and more economical and efficient and thus the capacity of single wind turbine increases continually, as the technology of wind power generation develop and the performance of the wind turbine improve and enhance gradually.

However, as the capacity of single wind turbine increases, the length and the weight of the various components of the wind turbine increase correspondingly, which substantially increases the difficulty of maintenance and enhances the cost of maintenance. Especially for the offshore wind turbine, under the effects of ocean storms and waves, it is more difficult to install and maintain, and the requirement of maintaining the necessary equipments is stricter. There are no hoisting equipments specialized for the offshore wind turbine in domestic, and thus the maintenance of the offshore wind turbine and the replacement of the large components thereof become more difficult and costly, and the time of the replacement and the maintenance also becomes longer.

At present, many large wind turbines are equipped with maintenance cranes, and can use their maintenance cranes to carry out the replacement and maintenance of some components. However, during the replacement of the components of the large wind turbine, it is very difficult to replace the blades, and the replacement of the blades cannot be achieved by the maintenance cranes of the large wind turbine. For the onshore wind turbine, the method could be used to replace the blades is as follows: disassembling the whole rotor of the wind turbine, and replacing the blades on the ground, and then installing the rotor back to the wind turbine. It is possible to require large apparatuses, wide installing areas and wind ropes, and thus it is difficult and expensive in term of maintenance. As for the offshore wind turbine, the rotor cannot be disassembled and installed as a whole, because there is no special apparatus dedicated for hoisting the offshore wind turbine, as well as because of the limitation of the installing area.

Therefore, an apparatus and method to resolve the problem of replacing of the blades in large wind turbine is required.

### SUMMARY OF THE INVENTION

In order to overcome the issue about the maintenance of the wind turbine, reduce the maintenance cost and improve the economical efficiency and security of wind farms, the main object of the invention is to provide a multifunctional platform of the wind turbine used for blade replacement, blade maintenance and tubular tower maintenance in the wind turbine, and a blade disassembling method in which the blade is replaced with the above platform through the maintenance crane equipped on the wind turbine without disassembling the rotor. A wind rope is not required when replacing the blade, so as to reduce the requirement to installing areas. When disassembling and installing a blade, the effect on the apparatus caused by wind and wave can be reduced, as well as the cost of maintenance and replacement of the blade, particularly for the offshore wind farms. Furthermore, maintenance for the tubular tower and blade of the wind turbine can be made regularly using the above apparatus.

The above object of the invention is achieved by providing a solution including:
a multifunctional platform of the wind turbine, characterized in that, the multifunctional platform comprises:
   a platform frame which includes a base having an annular central hole and two support arms, the support arms being parallel to each other, and extending from one side of the base;
   a winding mechanism which is used to translate the platform upward and downward and includes at least three traction devices, the traction devices being distributed around the annular central hole, and being fixed on the base;
   a plurality of tubular tower clamping mechanisms which are fixed around the circumference of the annular central hole of the platform frame, each of the tubular tower clamping mechanisms comprising a telescopically actuating mechanism and a clamping plate, the telescopically actuating mechanism being bringing the clamping plate to protrude in a direction toward the center of the annular central hole;
   a moving dolly which slides on the two support arms;
   two blade adjusting support abutments which are respectively equipped on the protruding ends of the two support arms;
   two sets of blade drawing mechanisms, one end of each set of blade drawing mechanism is connected with one blade adjusting support abutment.

In a preferred embodiment, the platform further comprises a plurality of anti-impacting mechanisms, each of which has one trolley wheel with a flexible outer surface, the trolley wheel pivotally arranged on one trolley wheel frame through one horizontal trolley wheel shaft, and the trolley wheel frames of the anti-impacting mechanisms installed on the inner circumference of the annular central hole of the platform frame.

In a preferred embodiment, the clamping plate has one cambered surface, on which a layer of soft rubber pad is equipped.

In a preferred embodiment, the telescopically actuating mechanism is a hydraulic cylinder, a leading screw nut or a pneumatic cylinder.

In a preferred embodiment, the blade drawing mechanisms are manual calabashes or electric calabashes.

In a preferred embodiment, the traction devices are electric winding engines, hydraulically powered winding engines or electric calabashes.

In a preferred embodiment, a displacement controlling mechanism is equipped between each of two ends of the moving dolly and a corresponding one of the two support arms of the platform frame, and a power mechanism is equipped on the base or on the moving dolly to drive the displacement controlling mechanism so as to adjust the position of the moving dolly.

In a preferred embodiment, the displacement controlling mechanism comprises two sprockets fixed to both ends of each support arm and a chain wound between the two sprockets, while the both ends of the moving dolly is respectively fixedly connected to the sprocket on a corresponding support arm, and the power mechanism comprises a worm and worm wheel mechanism, in which the power resource for the worm screw is manually driven, motor driven, pneumatically driven or hydraulically driven, and the shaft of the worm wheel is connected to one of the sprockets, and the two sets of sprockets on the two support arms are connected to each other via a coupling.

In a preferred embodiment, a walk platform and a guardrail are fixed on the outside of the platform frame.

The above object of the invention is achieved by providing a solution further including:
a blade disassembling method, characterized in that it comprises steps of:
   (1) hoisting the platform frame to both sides of the tubular tower, assembling together the two portions of the platform frame, to pass the tubular tower through the annular central hole of the platform frame;
   (2) placing a steel wire of the winding mechanism onto a hoisting point of a nacelle of the wind turbine, and running the winding mechanism to hoist the platform stably to a desired height;
   (3) pushing out the clamping plate at the front end of the tubular tower clamping mechanism, causing friction between the platform and the tubular tower, so as to prevent the rotation of the platform frame;
   (4) prior to disassembling a blade, tying sling ropes at three positions of the blade using the platform frame, with a first sling rope tied on a root side of the blade, a second sling rope tied on a tip side of the blade, and a third sling rope spaced apart from the second sling rope and closer to the blade tip side than the second sling rope; then placing the first sling rope and the second sling rope onto a hook of a crane ship, and each end of the third sling rope being connected to one of two sets of blade drawing mechanisms; and subsequently placing the blade root in place using a wind turbine maintenance crane;
   (5) loosening the hook of the crane ship, with the wind turbine maintenance crane and two sets of blade drawing mechanisms being in tension to maintain the stability of the blade;
   (6) beginning to disassemble bolts at the blade root, separating the blade root from the rotor using the combination of the wind turbine maintenance crane and the blade drawing mechanisms, with the multifunctional platform being stationary and the hook of the crane ship exerting no strength;
   (7) after the blade root separating from the rotor, the crane ship slowly tensioning the second sling rope maintaining the posture of the blade, and separating the two sets of blade drawing mechanisms from the third sling rope;
   (8) retracting the tubular tower clamping mechanism on the platform frame, and lowering the multifunctional platform to the bottom of the tubular tower using the winding mechanism;
   (9) lowering the blade slowly by using the cooperation of the wind turbine maintenance crane and the crane ship until the blade achieving a suitable height, adjusting the blade from longitudinal orientation to horizontal orientation with the crane ship catching the blade through the first and second sling ropes, then disassembling the hook of the maintenance crane and placing the blade onto a transport ship transversely using the crane ship, whereby completing the disassembling operation of the blade.

The present invention has following advantages compared to the prior art:
1. the replacement of the blade without disassembling the rotor through the maintenance crane of the wind turbine is achieved;
2. the blade is less affected by the different grounded conditions;
3. when the replacement of the blade is performed offshore, since the abutting joint is not affected by wind and wave, the replacement of the offshore wind turbine is achieved and the cost thereof is reduced, so as to solve the problem of hoisting the offshore wind turbine;
4. the maintenance for the tubular tower and blade of the wind turbine can be performed, with more security for the operator and more comfortability for the operational environment.

### BRIEF DESCRIPTION OF THE DRAWINGS

FIG. 1 illustrates an axonometric schematic view of the overall structure of a multifunctional platform in accordance with the invention;
FIG. 1A illustrates a partial enlarged schematic view of FIG. 1;
FIG. 2 illustrates a top view of a multifunctional platform in accordance with the invention;

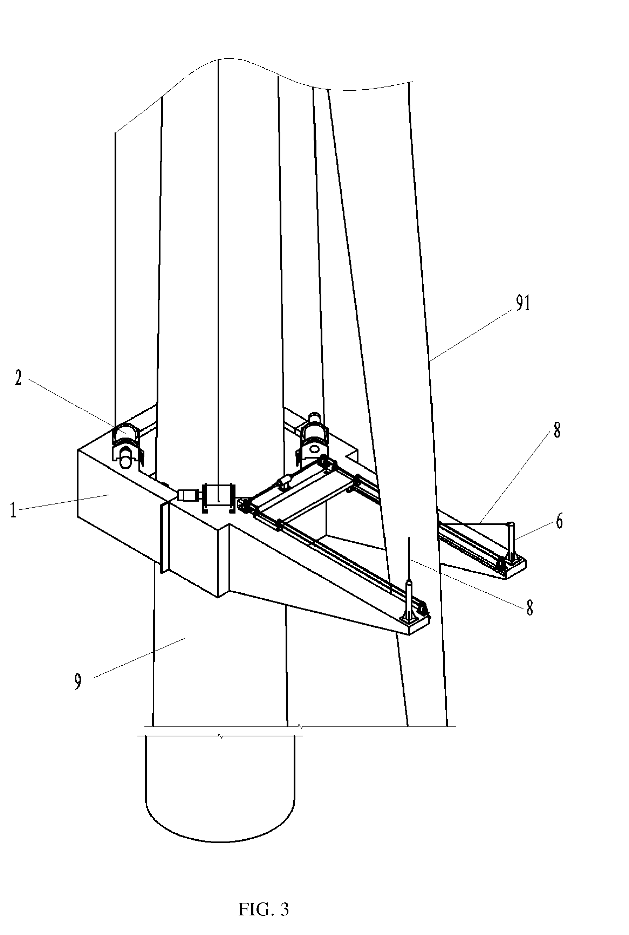

FIG. 3 illustrates a structural perspective schematic view of an embodiment in accordance with the invention fixed on a tubular tower;

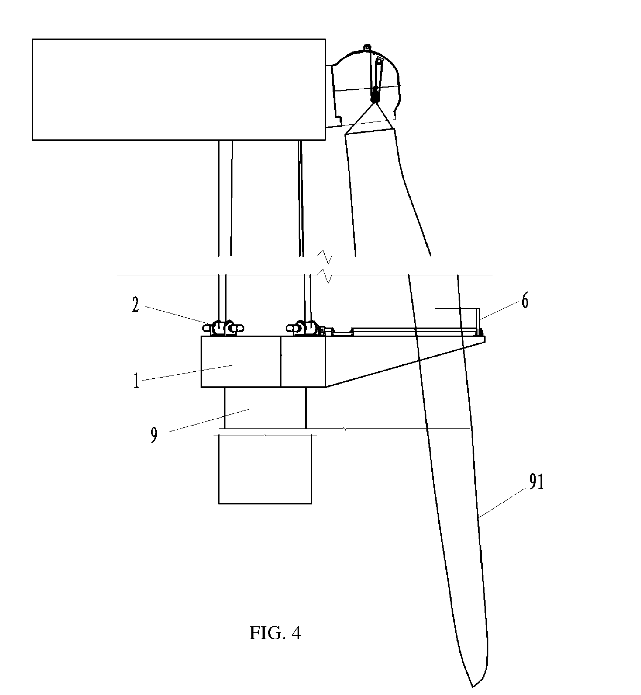

FIG. 4 illustrates a top view of an embodiment in accordance with the invention fixed on a tubular tower;
FIG. 5 illustrates a structural schematic view of an anti-impacting structure in accordance with the invention;
FIG. 6 illustrates a structural schematic view of a tubular tower clamping mechanism in accordance with the invention;

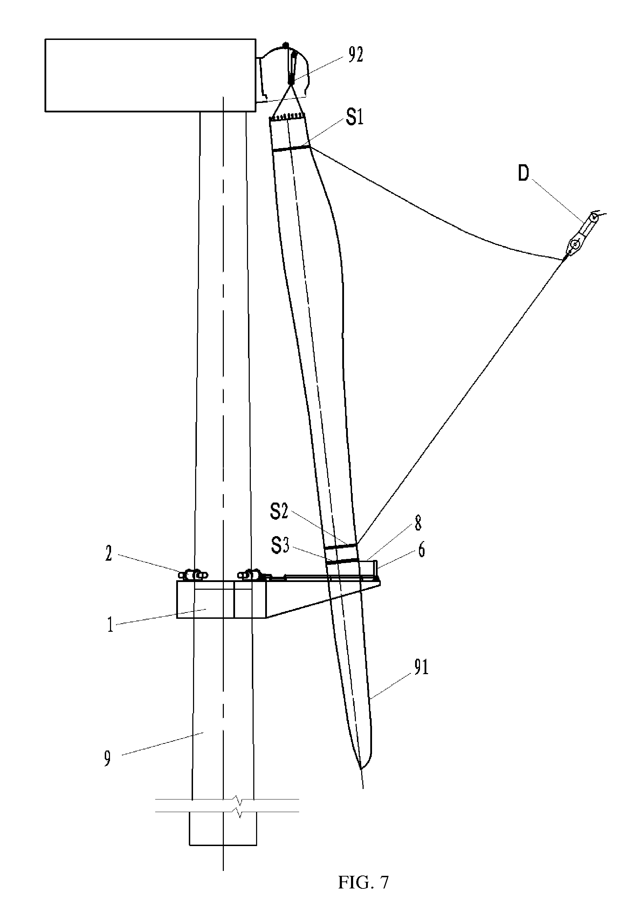

FIG. 7 illustrates a schematic view showing the operating principle for disassembling a blade from a rotor in accordance with the invention.

### DETAILED DESCRIPTION OF THE INVENTION

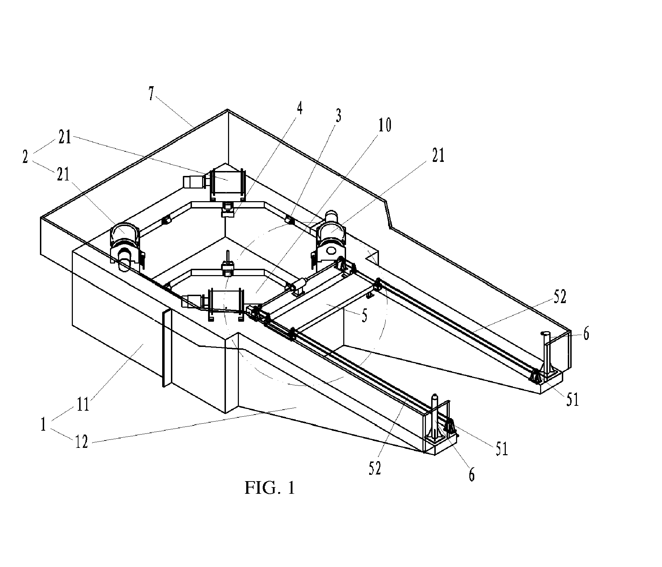

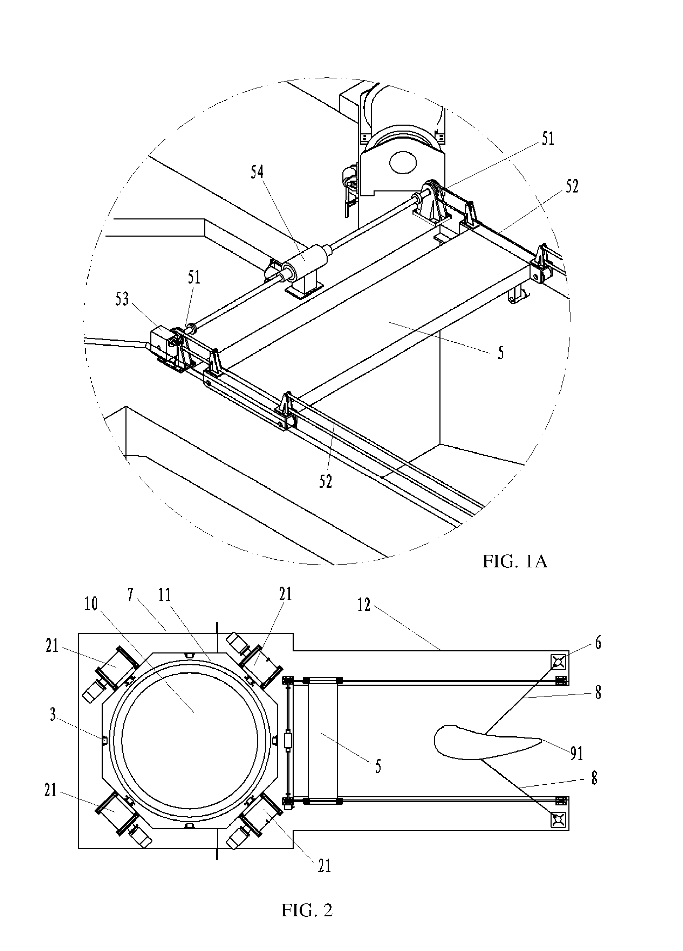

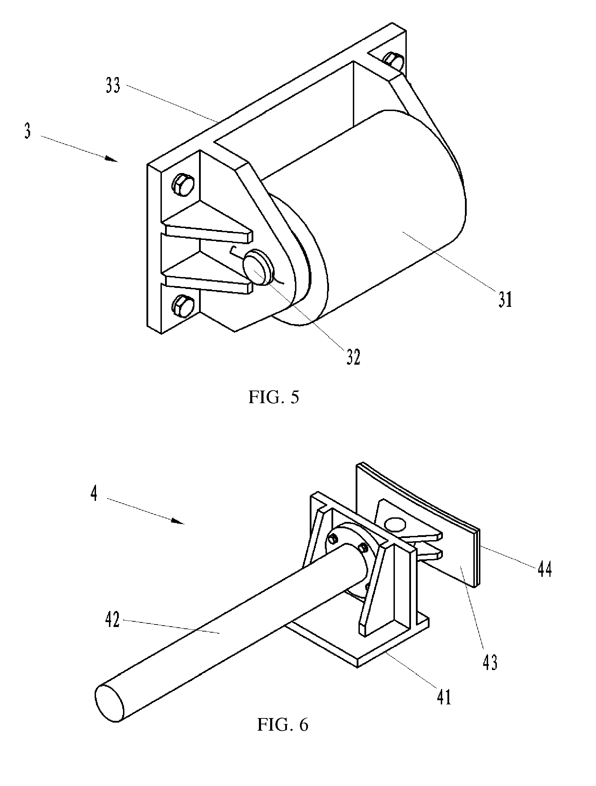

The present invention provides a multifunctional platform, as shown in FIG. 1, FIG. 1A and FIG. 2, comprising:
1. A platform frame 1, which is an installing base for functional components and provides an operating platform for operators to facilitate the operation, wherein the platform frame 1 is a separated structure including leading and trailing portions connected through bolts, so as to facilitate transportation and installation; in this embodiment, the platform frame 1 includes a base 11 having an annular central hole 10 and two parallel support arms 12, the support arms 12 being parallel to each other, and extending from one side of the base 11;
2. A winding mechanism 2, which is used to translate the platform upward and downward and includes at least three electric winding engines 21, the traction devices being distributed around the annular central hole 10, and being fixed on the base 11, wherein in this embodiment, there are four electric winding engines 21; however, the electric winding engines 21 can be replaced by various traction devices such as hydraulic winding engines or electric calabashes;
3. An anti-impacting mechanism 3, which has one trolley wheel 31 with flexible outer surface, the trolley wheel 31 pivotally arranged on one trolley wheel frame 33 through one horizontal trolley wheel shaft 32, as shown in FIG. 5, wherein as can be seen in FIG. 1, the trolley wheel frame 33 of the anti-impacting mechanism 3 is installed on inner perimeter of the annular central hole 10 of the platform frame 1, so that the trolley wheel 31 with flexible outer surface can dampen the impact between the platform frame 1 and a tubular tower 9 when the platform frame 1 slides upward and downward on the tubular tower;
4. A tubular tower clamping mechanism 4, which as shown in FIG. 6, includes a clamping support abutment 41 fixed at the perimeter of the annular central hole 10 of the platform frame 1, a hydraulic cylinder 42 a body of which is fixed on the clamping support abutment 41 and a piston rod of which extends toward center of the annular central hole 10, a clamping plate 43 fixed at the end of the piston rod and having one cambered surface, and a soft rubber pad 44 equipped on the cambered surface, wherein the tubular tower clamping mechanism 4 is operated in a way that the piston rod hydraulically pushes out the clamping plate 43; a great friction can be created between the platform frame 1 and the tubular tower 9 by the soft rubber pad 44 in close press fit with the tubular tower 9 so as to effectively prevent the rotation of the platform frame 1 to assure the operational stability of the multifunctional platform; the clamping mechanism 4 acts to clamp the tubular tower 9 only in the case that the platform frame 1 is not required to move up and down, and to limit the rotation of the platform frame 1 around the tubular tower 9; the limitation for hoisting and lowering the platform frame 1 are achieved by the winding engines however, the tubular tower clamping mechanism 4 is not limited to be driven hydraulically, and it should be appreciated that the hydraulic cylinder 42 can be replaced by a telescopically actuating mechanism such as a leading screw nut or a pneumatic cylinder and the like;
5. A moving dolly 5, a displacement controlling mechanism is equipped between each of two ends of the moving dolly and a corresponding one of the two support arms 12 of the platform frame 1, and a power mechanism is equipped on the base 11 or on the moving dolly 5 to drive the displacement controlling mechanism so as to adjust the position of the moving dolly 5, wherein in this embodiment, the displacement controlling mechanism comprises two sprockets 51 fixed to both ends of each support arm 12 and a chain 52 wound between the two sprockets 51, while each of the both ends of the moving dolly 5 is respectively fixedly connected to the sprocket 52 on a corresponding support arm 12, and the power mechanism comprises a worm and worm wheel mechanism 53 fixed on the base 11, in which the power resource for the worm screw is manually driven, and the shaft of the worm wheel is connected to one of the sprockets 51, and the two sets of sprockets 51 on the two support arms 12 are connected to each other via a coupling 54 to assure synchronous rotation;

Alternatively, the power resource for the worm screw can be motor driven, pneumatically driven or hydraulically driven, and the displacement controlling mechanism can be in form of a gear and rack, a synchronous belt and pulley or a leading screw nut and the like; when a gear and rack is used as the displacement controlling mechanism, the rack is fixed on the support arm 12 and the gear is installed on the moving dolly 5, while the power mechanism also is installed on the moving dolly 5 and the two gears are required to be connected to each other via the coupling 54 in order to assure synchronous rotation;
6. A blade adjusting support abutment 6, which is disposed on the protruding end of the support arm 12 and is used to provide a bearing base for replacing the blade and achieve the adjustment of the angle and position of the blade, wherein in this embodiment, two blade adjusting support abutments 6 are respectively equipped on the protruding ends of the two support arms 12;
7. a walk platform and a guardrail 7, which are fixed on the outside of the platform frame 1, so as to facilitate operating the components on the platform frame 1 and assure the security of the operators;
8. A blade drawing mechanism 8, which is used to adjust the angle and position of the blade 91 upon replacing the blade 91, wherein in this embodiment, there are two sets of blade drawing mechanisms 8 which can be in form of manual calabashes; the blade drawing mechanism 8 is coupled at one end to a sling rope of the blade 91 and at another end to the blade adjusting support abutment 6 of the blade 91, so as to achieve drawing the blade 91 through the action of the manual calabashes; however, it should be appreciated that the blade drawing mechanism 8 can be in form of other mechanism such as electric calabash and the like.

The process for replacing the blade 91 of a wind turbine using the present invention is shown as follows:
1. hoisting the platform frame 1 to both sides of the tubular tower 9, assembling together the two portions of the platform frame 1, to pass the tubular tower 9 through the annular central hole 10 of the platform frame 1;
2. placing a steel wire of the winding mechanism 2 onto a hoisting point of a nacelle of the wind turbine, and running the winding mechanism 2 to hoist the platform stably to a desired height;
3. pushing hydraulically out the clamping plate 43 at the front end of the tubular tower clamping mechanism 4, causing friction between the platform and the tubular tower 9, so as to prevent the rotation of the platform frame 1;
4. prior to disassembling a blade 91, tying sling ropes at three positions of the blade 91 using the platform frame 1, with a first sling rope S1 and a second sling rope S2 tied respectively on both sides of the weight center of the blade 91, e.g. the first sling rope S1 tied on a root side of the blade, the second sling rope S2 tied on a tip side of the blade, and a third sling rope S3 spaced apart from the second sling rope and closer to the blade tip side than the second sling rope;

Then placing the first sling rope S1 and the second sling rope S2 onto a hook D of a crane ship (an existing offshore crane device), and each end of the third sling rope S3 being connected to one of two sets of blade drawing mechanisms 8; and subsequently placing the blade 91 root in place using a wind turbine maintenance crane 92 (a device appended to the wind turbine);
5. loosening the hook of the crane ship, with the wind turbine maintenance crane 92 and two sets of blade drawing mechanisms being in tension to maintain the stability of the blade 91;
6. beginning to disassemble bolts at the blade 91 root, separating the blade 91 root from the rotor by using the cooperation of the wind turbine maintenance crane 92 and the blade drawing mechanisms 8, with the multifunctional platform being stationary and the hook of the crane ship exerting no strength;
7. after the blade 91 root separating from the rotor, the crane ship slowly tensioning the second sling rope S2 maintaining the posture of the blade 91, and separating the two sets of blade drawing mechanisms 8 from the third sling rope S3;
8. retracting the tubular tower clamping mechanism 4 on the platform frame 1, and lowering the multifunctional platform to the bottom of the tubular tower 9 using the winding mechanism 2;
9. lowering the blade 91 slowly by using the cooperation of the wind turbine maintenance crane 92 and the crane ship until the blade achieving a suitable height, adjusting the blade 91 from longitudinal orientation to horizontal orientation with the crane ship catching the blade 91 through the first sling rope S1 and the second sling rope S2, then disassembling the hook of the maintenance crane and placing the blade 91 onto a transport ship transversely using the crane ship, whereby completing the disassembling operation of the blade 91.
10. installing the blade 91 is reverse to the order in the process of disassembling the blade 91: firstly, installing the hook on the blade 91 root, tying sling ropes at three positions of the blade 91 with the position of the sling ropes similar to those when disassembling the blade 91, the wind turbine maintenance crane 92 placed onto the hook, placing the first sling rope S1 and the second sling rope S2 onto a hook of a crane ship, adjusting the blade 91 from horizontal orientation to longitudinal orientation and delivering the blade to a hub by using the cooperation of the wind turbine maintenance crane and the crane ship without the blade root in contact with the hub, hoisting the platform frame 1 to an operating position and clamping stably the platform frame to the tubular tower 9 maintaining the posture of the blade 91, placing the third sling rope S3 on the drawing mechanism, tensioning the drawing mechanism, loosening the sling ropes of the crane ship so that the blade 91 is not subject to a pull force of the crane ship, and delivering the blade 91 to the ground for installing by using the cooperation of the wind turbine maintenance crane 92 and the drawing mechanism on the platform;
5. upon maintenance of the tubular tower 9, running the winding mechanism 2 and translating the platform upward and downward based on requirement, after a predetermined position having been achieved, running the tubular tower clamping mechanism 4 to clamp the platform frame to the tubular tower 9, and then performing the maintenance, wherein the protruding length of the hydraulic cylinder 42 can be adjusted to change the distance between the operators and the tubular tower 9;
6. upon maintenance of the blade 91, which is similar to the maintenance of the tubular tower 9, due to the cone angle of the blade 91, the distance between the blade 91 and the tubular tower 9 being different at various positions, when performing the maintenance of the blade 91, moving the moving dolly 5 to a suitable position to complete the maintenance of the blade 91 by means of pitching.

For the above description of the invention, the preferred embodiments of the present invention are provided by way of the example, and are not used to limit the scope of protection of the present invention. It should be appreciated for those skilled in the art that many modifications, variants or equivalents can be made to the above embodiments without departing from the spirit and scope of the present invention defined by the appended claims.

## Claims

1. A multifunctional platform of the wind turbine, **characterized in that**, the multifunctional platform comprises:
a platform frame which includes a base having an annular central hole and two parallel support arms, the support arms being parallel to each other, and extending from one side of the base;
a winding mechanism which is used to translate the platform upward and downward and includes at least three traction devices, the traction devices being distributed around the annular central hole, and being fixed on the base;
a plurality of tubular tower clamping mechanisms which are fixed around the circumference of the annular central hole of the platform frame, each of the tubular tower clamping mechanisms comprising a telescopically actuating mechanism and a clamping plate, the telescopically actuating mechanism being bringing the clamping plate to protrude in a direction toward the center of the annular central hole;
a moving dolly which slides on the two support arms;
two blade adjusting support abutments which are respectively equipped on the protruding ends of the two support arms;
two sets of blade drawing mechanisms, one end of each set of blade drawing mechanism is connected with one blade adjusting support abutment.

2. The multifunctional platform of the wind turbine according to claim 1, **characterized in that**, the platform further comprises a plurality of anti-impacting mechanisms, each of which has one trolley wheel with a flexible outer surface, the trolley wheel pivotally arranged on one trolley wheel frame through one horizontal trolley wheel shaft, and the trolley wheel frames of the anti-impacting mechanisms installed on the inner circumference of the annular central hole of the platform frame.

3. The multifunctional platform of the wind turbine according to claim 1, **characterized in that**, the clamping plate has one cambered surface, on which a layer of soft rubber pad is equipped.

4. The multifunctional platform of the wind turbine according to claim 1, **characterized in that**, the telescopically actuating mechanism is a hydraulic cylinder, a leading screw nut or a pneumatic cylinder.

5. The multifunctional platform of the wind turbine according to claim 1, **characterized in that**, the blade drawing mechanisms are manual calabashes or electric calabashes.

6. The multifunctional platform of the wind turbine according to claim 1, **characterized in that**, the traction devices are electric winding engines, hydraulically powered winding engines or electric calabashes.

7. The multifunctional platform of the wind turbine according to claim 1, **characterized in that**, a displacement controlling mechanism is equipped between each of two ends of the moving dolly and a corresponding one of the two support arms of the platform frame, and a power mechanism is equipped on the base or on the moving dolly to drive the displacement controlling mechanism so as to adjust the position of the moving dolly.

8. The multifunctional platform of the wind turbine according to claim 7, **characterized in that**, the displacement controlling mechanism comprises two sprockets fixed to two ends of each support arm and a chain wound between the two sprockets, while each of the both ends of the moving dolly is respectively fixedly connected to the sprocket on a corresponding support arm, and the power mechanism comprises a worm and worm wheel mechanism, in which the power resource for the worm screw is manually driven, motor driven, pneumatically driven or hydraulically driven, and the shaft of the worm wheel is connected to one of the sprockets, and the two sets of sprockets on the two support arms are connected to each other via a coupling.

9. The multifunctional platform of the wind turbine according to claim 1, **characterized in that**, a walk platform and a guardrail are fixed on the outside of the platform frame.

10. A blade disassembling method, **characterized in that** it comprises steps of:
(1) hoisting the platform frame to both sides of the tubular tower, assembling together the two portions of the platform frame, to pass the tubular tower through the annular central hole of the platform frame;
(2) placing a steel wire of the winding mechanism onto a hoisting point of a nacelle of the wind turbine, and running the winding mechanism to hoist the platform stably to a desired height;
(3) pushing out the clamping plate at the front end of the tubular tower clamping mechanism, causing friction between the platform and the tubular tower, so as to prevent the rotation of the platform frame;
(4) prior to disassembling a blade, tying sling ropes at three positions of the blade using the platform frame, with a first sling rope tied on a root side of the blade, a second sling rope tied on a tip side of the blade, and a third sling rope spaced apart from the second sling rope and closer to the blade tip side than the second sling rope; then placing the first sling rope and the second sling rope onto a hook of a crane ship, and each end of the third sling rope being connected to one of two sets of blade drawing mechanisms; and subsequently placing the blade root in place using a wind turbine maintenance crane;
(5) loosening the hook of the crane ship, with the wind turbine maintenance crane and two sets of blade drawing mechanisms being in tension to maintain the stability of the blade;
(6) beginning to disassemble bolts at the blade root, separating the blade root from the rotor by using the cooperation of the wind turbine maintenance crane and the blade drawing mechanisms, with the multifunctional platform being stationary and the hook of the crane ship exerting no strength;
(7) after the blade root separating from the rotor, the crane ship slowly tensioning the second sling rope maintaining the posture of the blade, and separating the two sets of blade drawing mechanisms from the third sling rope;
(8) retracting the tubular tower clamping mechanism on the platform frame, and lowering the multifunctional platform to the bottom of the tubular tower using the winding mechanism;
(9) lowering the blade slowly by using the cooperation of the wind turbine maintenance crane and the crane ship until the blade achieving a suitable height, adjusting the blade from longitudinal orientation to horizontal orientation with the crane ship catching the blade through the first and second sling ropes, then disassembling the hook of the maintenance crane and placing the blade onto a transport ship transversely using the crane ship, whereby completing the disassembling operation of the blade.
